# EUROPÄISCHE PATENTSCHRIFT

(11) **EP 2 546 580 B1**
(45) Veröffentlichungstag und Bekanntmachung des Hinweises auf die Patenterteilung: **15.03.2017**
(21) Anmeldenummer: 12176000.3
(22) Anmeldetag: 11.07.2012
(51) Int. Cl.: F24F 12/00

(54) **Lüftungssystem zur Be- und/oder Entlüftung eines, insbesondere mehrgeschossigen, mehrere Räume aufweisenden Gebäudes**
Ventilation system for ventilating a building with multiple rooms, in particular one with multiple floors
Système de ventilation pour l'aération et/ou la purge d'un bâtiment à plusieurs étages contenant plusieurs pièces

(30) Priorität: 12.07.2011 DE 202011050699 U
(43) Veröffentlichungstag der Anmeldung: 16.01.2013
(73) Patentinhaber: TROX GmbH, 47506 Neukirchen-Vluyn (DE)
(72) Erfinder: Hamm, Thorsten, 46242 Bottrop (DE); Sefker, Thomas, Dr., 47506 Neukirchen-Vluyn (DE)
(74) Vertreter: DR. STARK & PARTNER

(56) Entgegenhaltungen:
- EP-A1- 1 132 690
- DE-A1- 4 135 130
- DE-A1- 4 202 838
- DE-A1- 10 139 927
- DE-U1- 20 115 688

## Beschreibung

Die Erfindung betrifft ein Lüftungssystem zur Be- und/oder Entlüftung eines, insbesondere mehrgeschossigen, mehrere Räume aufweisenden Gebäudes, mit zumindest zwei dezentralen Lüftungsgeräten, wobei jedem Raum ein dezentrales Lüftungsgerät zugeordnet ist und wobei jedes Lüftungsgerät einen mit dem zu belüftenden Raum verbundenen raumseitigen Zuluftauslass sowie einen mit dem zu belüftenden Raum verbundenen raumseitigen Abluftauslass aufweist.

In der Praxis werden dezentrale Lüftungsgeräte insbesondere zur Be- und Entlüftung von Räumen in Bürogebäuden oder Hotels eingesetzt. Im Gegensatz zu einem zentralen Lüftungssystem bedarf es keines Kanalnetzes, welches insbesondere durch alle Etagen hindurchgeführt werden muss. Auch können dezentrale Lüftungsgeräte einfach ein- und ausgeschaltet werden, wenn z.B. ein Hotelzimmer nicht bewohnt wird. Üblicherweise werden die dezentralen Lüftungsgeräte Fassaden nah eingesetzt, so dass Außenluft angesaugt und Fortluft in die Umgebung ausgeblasen werden kann. Aus der DE 101 39 927 A1 ist ein Gebäude mit einer Be- und Entlüftungsanlage bekannt. Die Be- und Entlüftungsanlage weist für jede Raumeinheit je eine Hauptleitung auf, die das Gebäude vertikal durchragt und an einem unteren, unterhalb des Stockwerkes, z. B. im Keller, angeordneten Ende in einen gemeinsamen Zuluftkanal mündet, der mit einer Eintrittsöffnung für Außenluft versehen ist. An einem oberen, z. B. im Dachboden gelegenen Ende münden die Hauptleitungen in einen gemeinsamen Schachtkopf, der eine Austrittsöffnung aufweist.

Insbesondere bei Gebäuden großer Höhe können auf der Luvseite hohe Windlasten wirken, so dass hier ein Überdruck herrscht, während auf der Leeseite ein Unterdruck besteht. Dies bedeutet, dass beispielsweise auf der Luvseite ein Abluftventilator zum Ausblasen der Fortluft u.a. gegen den durch die Windlast aufgebauten Überdruck arbeiten muss, damit die Fortluft in die Umgebung ausgeblasen wird.

Auf der Leeseite muss durch den Zuluftventilator Außenluft in Form von Zuluft in den Raum gefördert werden. Daher arbeitet der Zuluftventilator auf der Leeseite gegen den dort herrschenden Unterdruck, so dass auch hier eine hohe Ventilatorleistung verbunden mit einer entsprechenden Geräuschentwicklung erforderlich ist.

Aufgabe der Erfindung ist es, die vorgenannten Nachteile zu vermeiden und ein Lüftungssystem anzugeben, das auch bei hohen Windlasten eine effiziente Be- und Entlüftung gewährleistet.

Diese Aufgabe wird dadurch gelöst, dass das Lüftungsgerät einen Außenlufteinlass und einen Fortluftauslass aufweist, wobei der Außenlufteinlass über einen Außenluftkanal mit der Umgebung des Gebäudes verbunden und/oder der Fortluftauslass über einen Fortluftkanal mit der Umgebung des Gebäudes verbunden ist, wobei jeder Kanal entweder als ein sich durch das Gebäude erstreckender Kanal ausgebildet ist oder alternativ als ein um zumindest einen Teil des Gebäudes, insbesondere als ein um das ganze Gebäude nach Art eines Ringkanals, geführter Kanal ausgebildet ist, dessen eines Kanalende im Fassadenbereich der einen Seite des Gebäudes und dessen anderes Kanalende im Fassadenbereich einer anderen, vorzugsweise der genüberliegenden, Seite des Gebäudes endet.

Hat das Gebäude beispielsweise einen rechteckigen Grundriss und weist es einen mittigen Flur auf, von dem beidseitig Räume abgehen, erstreckt sich jeder Kanal von der einen Fassadenseite zu der gegenüberliegenden anderen Fassadenseite. Dabei sind vorzugsweise die Lüftungsgeräte zweier gegenüberliegender und durch den Flur voneinander abgetrennter Räume an einem gemeinsamen Kanal angeschlossen. Selbstverständlich können auch mehrere Räume an einem Kanal angeschlossen sein.

Insbesondere bei Gebäuden mit rundem Querschnitt bietet sich die Ausbildung als Ringkanal an. Bei derartigen örtlichen Gegebenheiten wird der Ringkanal vorzugsweise außenseitig um das ganze Gebäude herumgeführt. An den umlaufenden Ringkanal werden dann entweder die Außenlufteinlässe oder die Fortluftauslässe der einzelnen Lüftungsgeräte angeschlossen. Damit können bei jeder beliebigen Windrichtung die erfindungsgemäßen Vorteile genutzt werden. Der Ringkanal kann selbstverständlich aus optischen Gründen auch in eine Zwischenfassade integriert werden.

Bei dem erfindungsgemäßen Lüftungssystem kann ein Lüftungsgerät entweder nur mit einem durchgehenden Außenluftkanal oder nur mit einem durchgehenden Fortluftkanal oder aber mit einem durchgehenden Außenluftkanal und mit einem durchgehenden Fortluftkanal verbunden sein.

Zumindest ein Kanal kann im Bereich zumindest eines Kanalendes, vorzugsweise im Bereich beider Kanalenden, jeweils eine Rückschlagklappe aufweisen. Dies ermöglicht, dass der betreffende Kanal bei Wind je nach Schließrichtung der betreffenden Rückschlagklappe geschlossen oder geöffnet wird.

Vorzugsweise ist in dem als Außenluftkanal ausgebildeten Kanal im Bereich beider Kanalenden jeweils eine Rückschlagklappe vorgesehen, die Luft aus der Umgebung in den Außenluftkanal eintreten lassen aber nicht Luft aus dem Außenluftkanal in die Umgebung austreten lassen. Dadurch wird auf der Luvseite die Rückschlagklappe aufgrund der Windlast in ihre Offenstellung verschwenkt, so dass Luft in den Außenluftkanal eintreten kann. Die Rückschlagklappe auf der Leeseite befindet sich demgegenüber in der Schließstellung.

Vorzugsweise kann in dem als Fortluftkanal ausgebildeten Kanal im Bereich beider Kanalenden jeweils eine Rückschlagklappe vorgesehen sein, die Luft aus dem Fortluftkanal in die Umgebung austreten aber nicht Luft aus der Umgebung in den Fortluftkanal eintreten lassen. Im Bereich der Luvseite befindet sich die betreffende Rückschlagklappe in der Schließstellung. Demgegenüber ist die leeseitige Rückschlagklappe in ihrer Offenstellung, so dass Fortluft aus dem Kanal strömen kann.

In zumindest einem Kanal kann im Bereich zumindest eines Kanalendes, vorzugsweise im Bereich beider Kanalenden, je ein Volumenstrombegrenzer vorgesehen sein.

Dabei bietet es sich an, wenn in dem Außenluftkanal jedem Lüftungsgerät direkt ein Volumenstrombegrenzer zugeordnet ist.

Ferner bietet es sich an, wenn in dem Fortluftkanal jedem Lüftungsgerät direkt ein Volumenstrombegrenzer zugeordnet ist.

Im Folgenden werden in den Zeichnungen dargestellte Ausführungsbeispiele der Erfindung erläutert. Es zeigen:
- Fig. 1: ein Prinzipbild eines erfindungsgemäßen Beund Entlüftungssystem mit durchgehendem Fortluftkanal,
- Fig. 2: ein Prinzipbild eines erfindungsgemäßen Beund Entlüftungssystem mit durchgehendem Fortluft- und Außenluftkanal,
- Fig. 3: ein Prinzipbild eines erfindungsgemäßen Beund Entlüftungssystem mit durchgehendem Fortluft- und Außenluftkanal sowie Rückschlagklappen,
- Fig. 4: den Gegenstand nach Fig. 3 mit einer auf die rechte Fassadenseite wirkenden Windlast,
- Fig. 5: den Gegenstand nach Fig. 3 mit einer auf die linke Fassadenseite wirkenden Windlast,
- Fig. 6: ein Prinzipbild eines erfindungsgemäßen Beund Entlüftungssystem mit durchgehendem Fortluftkanal bei mehreren Räumen,
- Fig. 7: ein Prinzipbild eines erfindungsgemäßen Beund Entlüftungssystem mit durchgehendem Fortluft- und Außenluftkanal bei mehreren Räumen,
- Fig. 8: ein dezentrales Abluft/Zuluft-Lüftungsgerät mit Wärmerückgewinnung und
- Fig. 9: ein dezentrales Abluft/Zuluft-Lüftungsgerät mit Wärmerückgewinnung und Sekundäransaugung.

In allen Figuren werden für gleiche bzw. gleichartige Bauteile übereinstimmende Bezugszeichen verwendet.

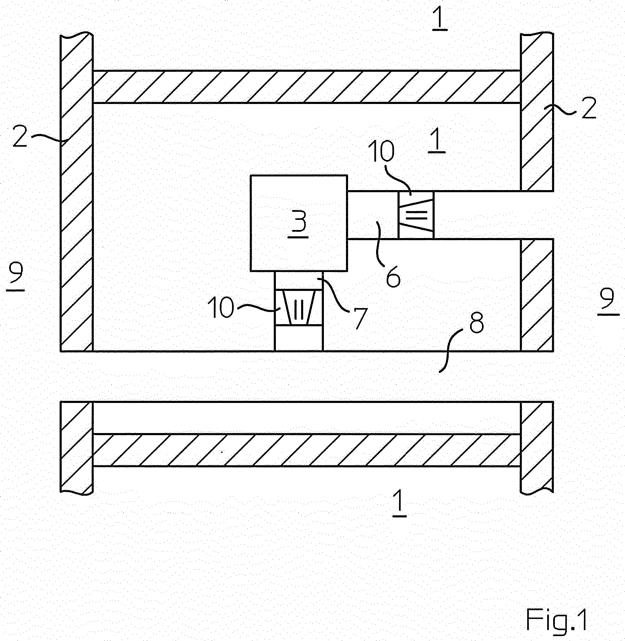

In Fig. 1 ist ein Be- und Entlüftungssystem zur Belüftung eines Raumes 1 dargestellt. Der Raum 1 wird von zwei Fassadenbereichen 2 begrenzt, wobei auf beiden Seiten des Raumes 1 noch weitere nicht dargestellte Räume 1 angrenzen können.

Zur Be- und Entlüftung ist in dem Raum 1 ein dezentrales Lüftungsgerät 3 vorgesehen. Das dezentrale Lüftungsgerät 3 weist einen nicht dargestellten, mit dem zu belüftenden Raum 1 verbundenen oder in diesen mündenden raumseitigen Zuluftauslass 4 sowie einen nicht dargestellten, mit dem zu belüftenden Raum 1 verbundenen raumseitigen Abluftauslass 5 auf.

Darüber hinaus ist ein Außenlufteinlass 6 sowie ein Fortluftauslass 7 vorgesehen, wobei der Fortluftauslass 7 über einen Fortluftkanal 8 mit der Umgebung 9 des Gebäudes verbunden ist. Der Fortluftkanal 8 ist als ein sich durch das Gebäude erstreckender Kanal ausgebildet, dessen eines Kanalende im Fassadenbereich 2 der einen Seite des Gebäudes und dessen anderes Kanalende im Fassadenbereich 2 der gegenüberliegenden Seite des Gebäudes endet.

Der Außenlufteinlass 6 des dezentralen Lüftungsgerätes 3 ist direkt durch den angrenzenden Fassadenbereich 2 in die Umgebung 9 geführt. Sowohl im Bereich des Außenlufteinlasses 6 als auch im Bereich des Fortluftauslasses 7 ist jeweils ein Volumenstrombegrenzer 10 vorgesehen.

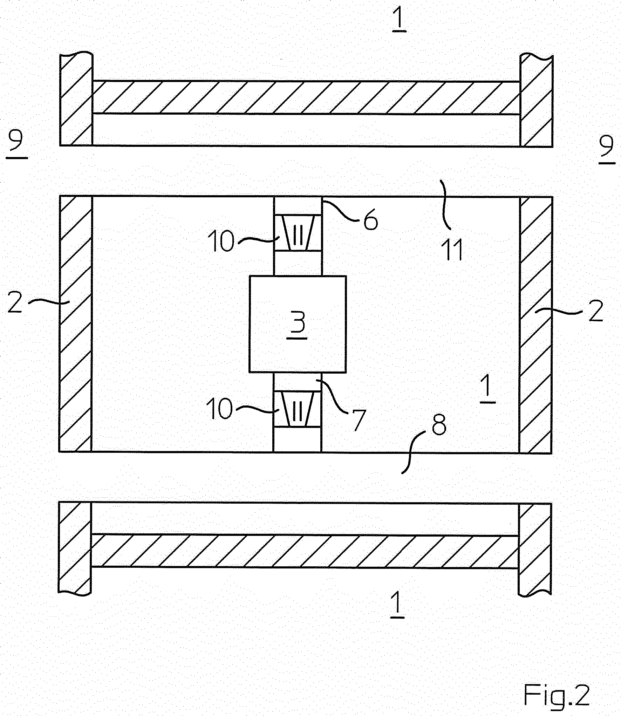

In Fig. 2 ist eine alternative Variante dargestellt. Wie Fig. 2 zu entnehmen ist, ist der Außenlufteinlass 6 über einen Außenluftkanal 11 mit der Umgebung 9 des Gebäudes verbunden, wobei der Außenluftkanal 11 als ein sich durch das Gebäude erstreckender Kanal ausgebildet ist, dessen eines Kanalende im Fassadenbereich 2 der einen Seite des Gebäudes und dessen anderes Kanalende im Fassadenbereich 2 der gegenüberliegenden Seite des Gebäudes endet.

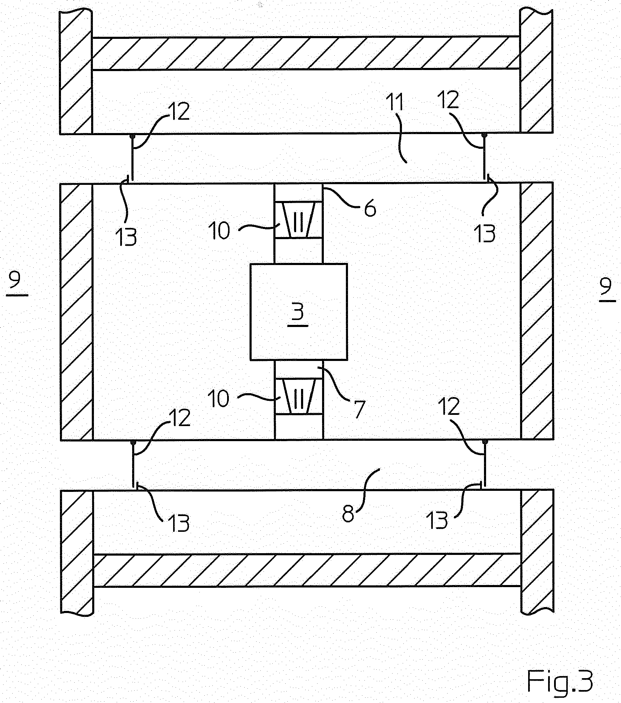

Fig. 3 stellt eine erweiterte Ausführungsform nach Fig. 2 dar. Hier ist sowohl in dem als Außenluftkanal 11 als auch in dem als Fortluftkanal 8 ausgebildeten Kanal im Bereich jedes Kanalendes, d.h. im Bereich jedes Fassadenbereichs 2, je eine Rückschlagklappe 12 mit einem zugeordneten Anschlag 13 vorgesehen.

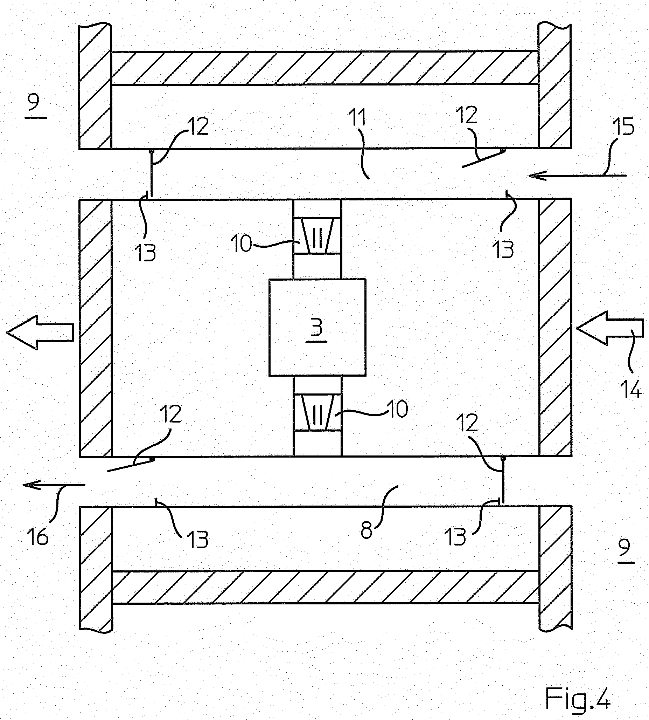

In Fig. 4 trifft eine Windlast 14 auf die rechte Fassadenseite. Infolgedessen wird die luvseitige Rückschlagklappe 12 in dem Außenluftkanal 11 geöffnet, während sich die leeseitige Rückschlagklappe 12 in ihrer Schließstellung befindet. Damit "staut" sich die Außenluft, die in Richtung des Pfeils 15 strömt, in dem Außenluftkanal 11 auf.

Die luvseitige Rückschlagklappe 12 in dem Fortluftkanal 8 befindet sich in dem dargestellten Ausführungsbeispiel in der Schließstellung und liegt damit an ihrem Anschlag 13 an. Die leeseitige Rückschlagklappe 12 befindet sich in ihrer Offenstellung, so dass die Fortluft aus dem Fortluftkanal 8 in Richtung des Pfeils 16 herausströmen kann.

Auf der Luvseite sorgt die Rückschlagklappe 12 in dem Fortluftkanal 8 damit dafür, dass keine Luft in den Fortluftkanal 8 hinein gedrückt wird. Auf der Leeseite unterstützt der Unterdruck das Ausblasen der Fortluft.

Ein hoher Unterdruck auf der Leeseite würde den Fortluftvolumenstrom anheben. Dieser wird jedoch durch den Volumenstrombegrenzer 10 auf den eingestellten Wert begrenzt. Daher setzt sich der Unterdruck im Fortluftkanal 8 noch weiter in Richtung der Luvseite fort und unterstützt die Fortluftabsaugung auch in auf der Luvseite angeordneten Räumen 1. Auch hier sorgt der jedem Raum 1 zugeordnete Volumenstrombegrenzer 10 für eine Volumenstrombegrenzung.

Die maximale Druckerhöhung, die der in dem Lüftungsgerät 3 vorgesehene Abluftventilator 31 fördern muss, ist der direkte Weg vom Lüftungsgerät 3 über den Fortluftkanal 8 auf den leeseitigen Fassadenbereich 2 über die Rückschlagklappe 12. Die Fortluft wird nur über den luvseitigen Fassadenbereich 2 ausgeblasen, wenn der Druckverlust über diesen Weg geringer ist.

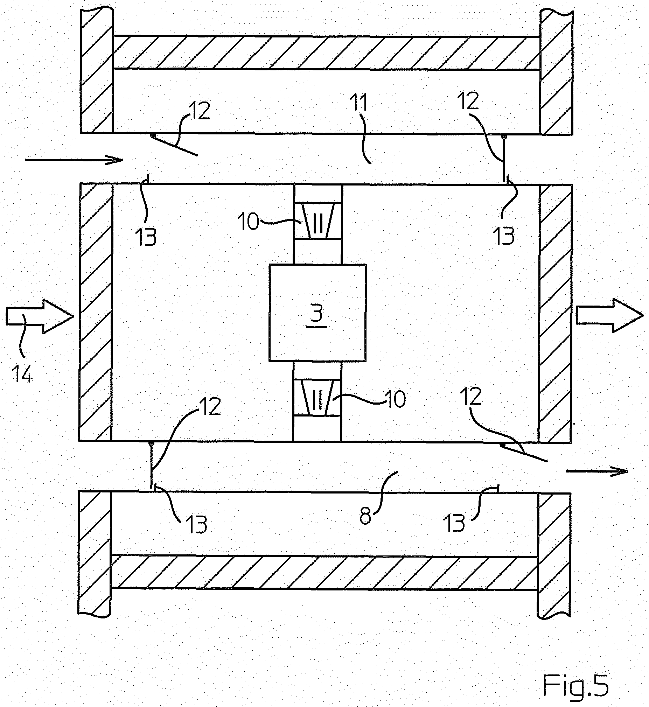

In Fig. 5 ist der umgekehrte Fall dargestellt. Hier wirkt auf den linken Fassadenbereich eine Windlast 14. Infolgedessen ist die luvseitige Rückschlagklappe 12 im Außenluftkanal 11 geöffnet, während die leeseitige Rückschlagklappe 12 an ihrem Anschlag 13 anliegt. In dem Fortluftkanal 8 liegt die luvseitige Rückschlagklappe 12 an ihrem Anschlag 13 an, während sich die leeseitige Rückschlagklappe 12 in ihrer Offenstellung befindet.

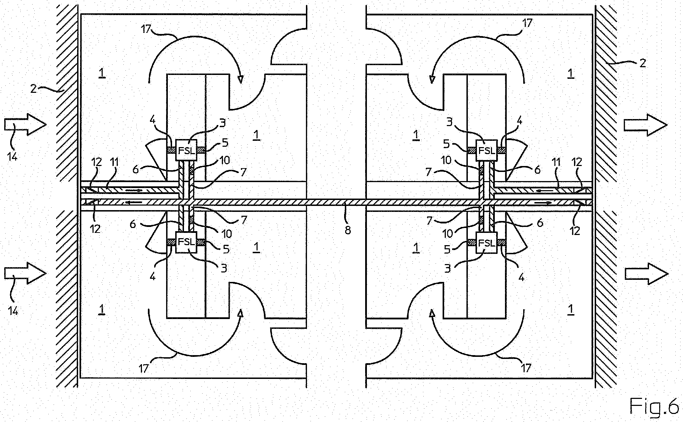

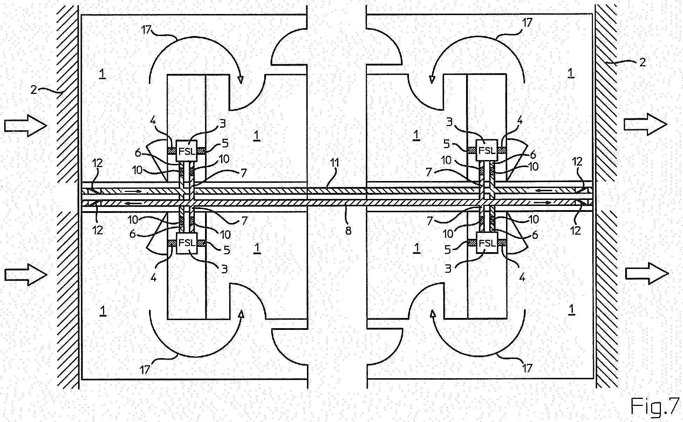

In den Fig. 6 und 7 sind Anordnungen nach den Fig. 1 und 2 für mehrere Räume dargestellt. Hier besteht jede Nutzungseinheit aus zwei Räumen 1. Innerhalb der beiden Räume 1 einer Nutzungseinheit strömt die Luft von dem raumseitigen Zuluftauslass 4 des jeweiligen dezentralen Lüftungsgeräts 3 in Richtung des Pfeils 17 zu dem entsprechenden raumseitigen Abluftauslass 5.

Wie Fig. 6 zu entnehmen ist, ist hier lediglich der Fortluftkanal 8 durch das Gebäude geführt. Der Außenluftkanal 11 ist nicht durch das Gebäude geführt. Stattdessen münden die Außenlufteinlässe 6 der Lüftungsgeräte 3 in den Räumen 1, die an einen gemeinsamen Fassadenbereich 2 angrenzen, d.h. auf einer Seite des Gebäudes liegen, in einen gemeinsamen Außenluftkanal 11. Jeder Außenluftkanal 11 endet in dem angrenzenden Fassadenbereich 2. Im Fassadenbereich ist in dem Außenluftkanal 11 neben der Rückschlagklappe 12 noch ein nicht dargestellter Volumenstrombegrenzer 10 vorgesehen. Alternativ kann auch jeweils vor jedem Lüftungsgerät 3 ein Volumenstrombegrenzer 10 vorgelagert sein.

Die Fortluftauslässe 7 sind über einen Fortluftkanal 8 mit der Umgebung 9 des Gebäudes verbunden. Der Fortluftkanal 8 ist als ein sich durch das Gebäude erstreckender Kanal ausgebildet, dessen eines Kanalende im Fassadenbereich 2 der einen Seite des Gebäudes und dessen anderes Kanalende im Fassadenbereich 2 an der anderen Seite des Gebäudes endet. In dem als Fortluftkanal 8 ausgebildeten Kanal sind im Bereich jedes Kanalendes, d.h. im Bereich jedes Fassadenbereichs 2 eine Rückschlagklappe 12 mit einem zugeordneten Anschlag 13 vorgesehen. Im Bereich des Fortluftauslasses 7 ist jeweils ein Volumenstrombegrenzer 10 vorgesehen.

Auf der Luvseite begrenzt der in dem Außenluftkanal 11 angeordnete Volumenstrombegrenzer 10 die über den Außenluftkanal 11 strömende Menge auf den eingestellten Wert. Jeder Zuluftventilator 23 muss nur den Druck des anschließenden Kanalnetzes in den Raum 1 überwinden.

Die Rückschlagklappe 12 auf der Leeseite verhindert in dem Außenluftkanal 11 ein Heraussaugen der Luft über den Außenluftkanal 11. Jeder Zuluftventilator 23 der Lüftungsgeräte 3 auf der Leeseite muss den hier herrschenden fassadenseitigen Unterdruck sowie den Druckverlust über den Außenluftkanal 11 überwinden. Der Einsatz von volumenstromkonstanten Zuluftventilatoren 23 bietet sich bei diesem Ausführungsbeispiel an.

Bei dem Ausführungsbeispiel nach Fig. 7 sind auch die Außenlufteinlässe 6 über einen Außenluftkanal 11 mit der Umgebung 9 des Gebäudes verbunden. Der Außenluftkanal 11 ist als ein sich durch das Gebäude erstreckender Kanal ausgebildet, dessen eines Kanalende im Fassadenbereich 2 der einen Seite des Gebäudes und dessen anderes Kanalende im Fassadenbereich 2 an der gegenüberliegenden Seite des Gebäudes endet. In dem als Außenluftkanal 11 ausgebildeten Kanal sind im Bereich jedes Kanalendes, d.h. im Bereich jedes Fassadenbereichs 2 eine Rückschlagklappe 12 mit einem zugeordneten Anschlag 13 vorgesehen. Im Bereich jedes Außenlufteinlasses 6 ist ein Volumenstrombegrenzer 10 vorgesehen.

Bei dem Ausführungsbeispiel nach Fig. 7 darf hinsichtlich der Fortluft auf die Erläuterungen zu dem Ausführungsbeispiel nach Fig. 6 verwiesen werden.

In dem Außenluftkanal 11 ist in beiden Fassadenbereichen 2 je eine Rückschlagklappe 12 vorgesehen. Die Volumenstrombegrenzer 10 sind im Bereich jedes Außenlufteinlasses 6 eines Lüftungsgeräts 3 angeordnet. Die Rückschlagklappe 12 auf der Leeseite verhindert, dass Luft aus dem Außenluftkanal 11 herausgesaugt wird. Auf der Luvseite begrenzt der Volumenstrombegrenzer 10 den Volumenstrom auf den Wert, der zur Versorgung der Räume 1 benötigt wird.

Jedes Lüftungsgerät 3 fördert den eingestellten Volumenstrom. Die Luftmenge, die in dem luvseitigen Raum 2 nicht abgeschöpft wird, fließt auf die leeseitige Gebäudeseite und wird dort über das entsprechende Lüftungsgerät 3 in den dazugehörigen leeseitigen Raum 1 geleitet. Da der maximale Volumenstrom, der durch den Außenluftkanal 11 fließen kann, bei dem in Fig. 7 dargestellten Ausführungsbeispiel dem 4-fachen Volumenstrom eines Raumes 1 entspricht, muss der Außenluftkanal 11 entsprechend ausgelegt werden.

Wenn Winddruck auf einen Fassadenbereich 2 ansteht, müssen die Zuluftventilatoren 23 nur den Druckverlust überwinden, der sich hinter dem Volumenstrombegrenzer 10 bis zum Lüftungsgerät 3 hin aufbaut. Weht kein Wind müssen die Zuluftventilatoren 23 den Widerstand des Außenluftkanals 11 zusätzlich entsprechend überwinden. Auf diesen Betriebspunkt wird der betreffende Zuluftventilator 23 vorzugsweise eingestellt. Der Einsatz von volumenstromkonstanten Zuluftventilatoren 23 ist bei dem Ausführungsbeispiel nach Fig. 7 nicht erforderlich, da der konstante Volumenstrom über die Volumenstrombegrenzer 10 sichergestellt wird. Durch ein Abschalten eines Lüftungsgerätes 3 wird der verbleibende Bereich des Außenluftkanals 11 nicht beeinflusst.

Im Gegensatz zu dem Ausführungsbeispiel beispielsweise nach Fig. 7 müssen bei dem Ausführungsbeispiel beispielsweise nach Fig. 6 die Außenluftventilatoren 23 volumenstromkonstant ausgeführt sein, so dass diese bei einer auftretenden Windlast 14 den Unterdruck auf der Leeseite des Gebäudes überwinden. Der betreffende Außenluftventilator 23 muss seine Drehzahl selbständig erhöhen.

Vorzugsweise sind alle Kanäle, d.h. alle Fortluftkanäle 8 und Außenluftkanäle 11 mit zumindest einem Schalldämpfer ausgestattet, der die Geräusche der Volumenstrombegrenzer 10 reduziert.

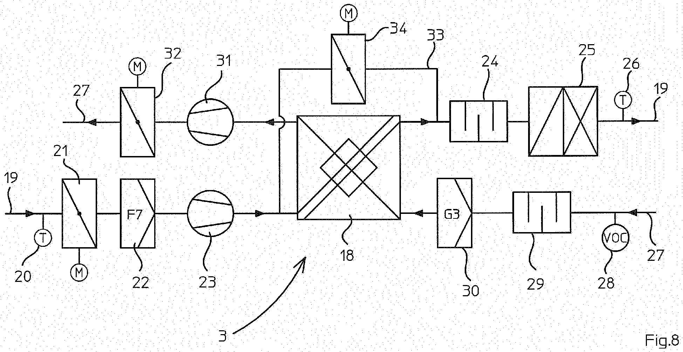

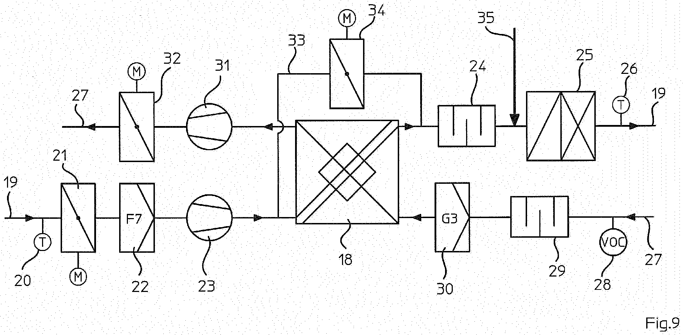

In den Fig. 8 und 9 ist beispielhaft ein dezentrales Abluft-/Zuluft-Lüftungsgerät 3 mit Wärmerückgewinnung dargestellt. Das Lüftungsgerät 3 weist einen Wärmetauscher 18 auf, der von der Außenluft und der Abluft im Gegenstrom durchströmt wird. In Strömungsrichtung 19 gesehen vor dem Wärmetauscher 18 ist in dem Zuluftzweig ein optionaler Außentemperaturfühler 20, eine motorisch betätigbare Verschlussklappe 21, ein Feinstaubfilter 22 sowie ein Zuluftventilator 23 vorgesehen. Hinter dem Wärmetauscher 18 schließt sich ein Schalldämpfer 24, ein Lufterhitzer 25 und ein optionaler Zulufttemperaturfühler 26 an.

In dem Abluftzweig schließt sich in Strömungsrichtung 27 gesehen vor dem Wärmetauscher 18 ein VOC-Sensor 28, ein Schalldämpfer 29 und ein Grobstaubfilter 30 an. Hinter dem Wärmetauscher 18 ist ein Abluftventilator 31 und eine motorische Verschlussklappe 32 vorgesehen.

Zusätzlich ist in dem Zuluftzweig ein Bypass 33 mit einer motorisch betätigbaren Bypassklappe 34 vorgesehen, um Außenluft unter Umgehung des Wärmetauschers 18 führen zu können.

Bei dem in Fig. 9 dargestellten Ausführungsbeispiel befindet sich in dem Zuluftzweig noch eine Sekundärlufteinmischung 35. Bei Sekundärluft handelt es sich um Raumluft, die nicht in die Umgebung 9 abgeführt, sondern wieder dem Raum 2 zugeführt werden soll.

Erfolgt die Sekundärlufteinmischung 35, wie in Fig. 9 dargestellt, in Strömungsrichtung gesehen hinter dem Zuluftventilator 23, ist für die Beimischung der Sekundärluft ein nichtdargestellter Sekundärluftventilator erforderlich.

Auf einen solchen Sekundärluftventilator kann verzichtet werden, wenn die Sekundärlufteinmischung 35 in Strömungsrichtung gesehen vor dem Zuluftventilator 23, d.h. beispielsweise zwischen dem Feinstaubfilter 22 und dem Zuluftventilator 23 erfolgt.

Selbstverständlich kann der Filter 22, bei dem es sich beispielsweise um einen F7-Filter handelt, auch außerhalb des Lüftungsgeräts 3 angeordnet sein. In diesem Fall ist der Filter 22 vor dem Lüftungsgerät 3 in dem Außenluftkanal 11 angeordnet.

In den Fig. 8 und 9 ist in dem Außenluftkanal 11 ein Lufterhitzer 25 dargestellt. Hierbei kann es sich selbstverständlich auch um einen Luftkühler handeln.

Bei dem dezentralen Lüftungsgerät 3 kann es sich beispielsweise auch um ein reines Abluft-Lüftungsgerät, um ein reines Zuluft-Lüftungsgerät oder um ein Abluft/Zuluft-Lüftungsgerät ohne eine Wärmerückgewinnung handeln.

In keiner der Figuren ist die alternative Ausgestaltung dargestellt, bei der der Außenluftkanal (11) und/oder der Fortluftauslass (7) jeweils als ein um zumindest einen Teil des Gebäudes, insbesondere als ein um das ganze Gebäude nach Art eines Ringkanals, geführter Kanal ausgebildet ist(sind). Eine solche Ausgestaltung bietet sich insbesondere bei Gebäuden mit runden Grundrissen an.

## Patentansprüche

1. Lüftungssystem zur Be- und/oder Entlüftung eines, insbesondere mehrgeschossigen, mehrere Räume (1) aufweisenden Gebäudes, mit zumindest zwei dezentralen Lüftungsgeräten (3), wobei jedem Raum (1) ein dezentrales Lüftungsgerät (3) zugeordnet ist und wobei jedes Lüftungsgerät (3) einen mit dem zu belüftenden Raum (1) verbundenen raumseitigen Zuluftauslass (4) sowie einen mit dem zu belüftenden Raum (1) verbundenen raumseitigen Abluftauslass (5) aufweist, wobei das Lüftungsgerät (3) einen Außenlufteinlass (6) und einen Fortluftauslass (7) aufweist, wobei der Außenlufteinlass (6) über einen Außenluftkanal (11) mit der Umgebung (9) des Gebäudes verbunden und/oder der Fortluftauslass (7) über einen Fortluftkanal (8) mit der Umgebung (9) des Gebäudes verbunden ist, **dadurch gekennzeichnet, dass** jeder Kanal entweder als ein sich durch das Gebäude erstreckender Kanal ausgebildet ist oder als ein um zumindest einen Teil des Gebäudes geführter Kanal ausgebildet ist, dessen eines Kanalende im Fassadenbereich (2) der einen Seite des Gebäudes und dessen anderes Kanalende im Fassadenbereich (2) einer anderen, vorzugsweise der genüberliegenden, Seite des Gebäudes endet.

2. Lüftungssystem nach dem vorhergehenden Anspruch, **dadurch gekennzeichnet, dass** zumindest ein Kanal im Bereich zumindest eines Kanalendes, vorzugsweise im Bereich beider Kanalenden, jeweils eine Rückschlagklappe (12) aufweist.

3. Lüftungssystem nach einem der vorhergehenden Ansprüche, **dadurch gekennzeichnet, dass** in dem als Außenluftkanal (11) ausgebildeten Kanal im Bereich beider Kanalenden jeweils eine Rückschlagklappe (12) vorgesehen ist, die Luft aus der Umgebung (9) in den Außenluftkanal (11) eintreten aber nicht austreten lassen.

4. Lüftungssystem nach einem der vorhergehenden Ansprüche, **dadurch gekennzeichnet, dass** in dem als Fortluftkanal (8) ausgebildeten Kanal im Bereich beider Kanalenden jeweils eine Rückschlagklappe (12) vorgesehen ist, die Luft aus dem Fortluftkanal (8) in die Umgebung (9) austreten aber nicht eintreten lassen.

5. Lüftungssystem nach einem der vorhergehenden Ansprüche, **dadurch gekennzeichnet, dass** in zumindest einem Kanal im Bereich zumindest eines Kanalendes, vorzugsweise im Bereich beider Kanalenden, je ein Volumenstrombegrenzer (10) vorgesehen ist.

6. Lüftungssystem nach einem der vorhergehenden Ansprüche, **dadurch gekennzeichnet, dass** in dem Außenluftkanal (11) jedem Lüftungsgerät (3) ein Volumenstrombegrenzer (10)zugeordnet ist.

7. Lüftungssystem nach einem der vorhergehenden Ansprüche, **dadurch gekennzeichnet, dass** in dem Fortluftkanal (8) jedem Lüftungsgerät (3) direkt ein Volumenstrombegrenzer (10) zugeordnet ist.

## Claims

1. Ventilation system for air introduction into and/or air extraction from a building, in particular a multi-storey building with multiple rooms (1), including at least two decentralised ventilation devices (3), wherein one decentralised ventilation device (3) is allocated to each room (1), and wherein each ventilation device (3) comprises a room-side air admission outlet (4) connected to the room (1) which is to be ventilated, and a room-side extraction air outlet (5) connected to the room (1) from which air is to be extracted, wherein the ventilation device (3) comprises an outside air inlet (6) and a vent air outlet (7), wherein the outside air inlet (6) is connected via an outside air channel (11) to the surrounding environment (9) of the building, and/or the vent air outlet (7) is connected via a vent air channel (8) to the surrounding environment (9) of the building, **characterised in that** each channel is configured either as a channel extending through the building or as a channel which is guided around at least a part of the building, of which one channel end ends in the façade region (2) of one side of the building, and of which the other channel end ends in the façade region (2) of another, preferably opposite, side of the building.

2. Ventilation system according to the preceding claim, **characterised in that** at least one channel comprises in each case a non-return clack valve (12) in the region of at least one channel end, preferably in the region of both channel ends.

3. Ventilation system according to one of the preceding claims, **characterised in that** in each case, in the channel configured as the outside air channel (11), in the region of both channel ends, a non-return clack valve (12) is provided, which allows the air from the surrounding environment (9) to enter into the outside air channel (11), but does not allow it to escape.

4. Ventilation system according to any one of the preceding claims, **characterised in that** in each case, in the channel configured as the vent air channel (8), in the region of both channel ends, a non-return clack valve (12) is provided, which allows the air from the vent air channel (8) to escape into the surrounding environment (9), but does not allow it to enter.

5. Ventilation system according to any one of the preceding claims, **characterised in that** in at least one channel, in the region of at least one channel end, preferably in the region of both channel ends, a volume flow limiter (10) is provided in each case.

6. Ventilation system according to any one of the preceding claims, **characterised in that**, in the outside air channel (11), a volume flow limiter (10) is allocated to each ventilation device (3).

7. Ventilation system according to any one of the preceding claims, **characterised in that**, in the vent air channel (8), a volume flow limiter (10) is allocated directly to each ventilation device (3).

## Revendications

1. Système d'aération dévolu à la ventilation et/ou à l'expulsion de l'air d'un bâtiment présentant plusieurs locaux (1) et comptant notamment plusieurs étages, comprenant au moins deux appareils d'aération (3) décentralisés, un appareil d'aération (3) décentralisé étant associé à chaque local (1), et chaque appareil d'aération (3) étant muni d'une sortie (4) d'air affluant, située côté local et raccordée au local (1) devant être ventilé, ainsi que d'une sortie (5) d'air évacué qui est située côté local et est raccordée audit local (1) à ventiler,
l'appareil d'aération (3) comportant une admission (6) d'air extérieur et une sortie (7) d'air vicié, sachant que ladite admission (6) d'air extérieur est raccordée à l'espace environnant (9) du bâtiment par l'intermédiaire d'un canal (11) à air extérieur, et/ou que ladite sortie (7) d'air vicié est raccordée audit espace environnant (9) dudit bâtiment par l'intermédiaire d'un canal (8) à air vicié, **caractérisé par le fait que**
chaque canal est réalisé sous la forme d'un canal traversant le bâtiment, ou est réalisé sous la forme d'un canal qui parcourt au moins une partie dudit bâtiment, dont l'une des extrémités s'achève dans la région de la façade (2) de l'un des côtés du bâtiment et dont l'autre extrémité s'achève dans la région de la façade (2) d'un autre côté dudit bâtiment, de préférence du côté tourné à l'opposé.

2. Système d'aération selon la revendication précédente, **caractérisé par le fait qu'**au moins un canal est pourvu d'un clapet antiretour (12) respectif dans la région d'au moins une extrémité dudit canal, de préférence dans la région des deux extrémités dudit canal.

3. Système d'aération selon l'une des revendications précédentes, **caractérisé par** la présence, dans le canal réalisée en tant que canal (11) à air extérieur, dans la région des deux extrémités dudit canal, d'un clapet antiretour (12) respectif qui permet à de l'air, provenant de l'espace environnant (9), de pénétrer dans ledit canal (11) à air extérieur, mais ne lui permet pas d'en sortir.

4. Système d'aération selon l'une des revendications précédentes, **caractérisé par** la présence, dans le canal réalisée en tant que canal (8) à air vicié, dans la région des deux extrémités dudit canal, d'un clapet antiretour (12) respectif qui permet à de l'air, provenant dudit canal (8) à air vicié, de sortir dans l'espace environnant (9), mais ne lui permet pas d'y pénétrer.

5. Système d'aération selon l'une des revendications précédentes, **caractérisé par le fait qu'**un régulateur respectif (10) de débit est prévu dans au moins un canal, dans la région d'au moins une extrémité dudit canal, de préférence dans la région des deux extrémités dudit canal.

6. Système d'aération selon l'une des revendications précédentes, **caractérisé par le fait qu'**un régulateur de débit (10) est associé à chaque appareil d'aération (3) dans le canal (11) à air extérieur.

7. Système d'aération selon l'une des revendications précédentes, **caractérisé par le fait qu'**un régulateur de débit (10) est directement associé à chaque appareil d'aération (3) dans le canal (8) à air vicié.
